# EUROPÄISCHE PATENTSCHRIFT

(11) **EP 0 950 027 B1**
(45) Veröffentlichungstag und Bekanntmachung des Hinweises auf die Patenterteilung: **05.12.2001**
(21) Anmeldenummer: 97942803.4
(22) Anmeldetag: 05.09.1997
(51) Int. Cl.: C02F 3/08

(54) **SCHEIBENTAUCHKÖRPER**
BIOLOGICAL DISK
DISQUE BIOLOGIQUE

(30) Priorität: 09.09.1996 DE 29615617 U; 14.12.1996 DE 19652156
(43) Veröffentlichungstag der Anmeldung: 20.10.1999
(73) Patentinhaber: Waizenegger, Klaus, Dipl.-Ing., 78532 Tuttlingen (DE)
(72) Erfinder: Waizenegger, Klaus, Dipl.-Ing., 78532 Tuttlingen (DE)
(74) Vertreter: Patentanwälte Westphal, Mussgnug & Partner
(86) Internationale Anmeldenummer: DE9701974
(87) Internationale Veröffentlichungsnummer: WO9811025

(56) Entgegenhaltungen:
- US-A- 4 149 972
- US-A- 4 549 962

## Beschreibung

Die Erfindung betrifft einen Scheibentauchkörper mit einer Welle, auf welcher eine Vielzahl von kreisförmigen, aus einzelnen Sektoren mit gleichem Radius zusammengesetzten Scheiben radial angeordnet und von achsparallelen, in radial angeordneten Streben geführten Zugankern gehalten sind, welche Scheiben mittels zwischengefügter Abstandhalter einen definierten axialen Abstand zueinander aufweisen.

Scheibentauchkörper werden in Scheibentauchkörperanlagen zur biologischen Reinigung von Abwässern eingesetzt. Sie sind aus mehreren kreisförmigen Scheiben zusammengesetzt, welche an einer gemeinsamen Welle befestigt sind und als Bewuchsträger für im Abwasser anwesende Mikroorganismen dienen.

Hierzu tauchen die Scheiben des Scheibentauchkörpers jeweils etwa mit einer Hälfte ihrer Fläche in ein mit dem zur biologischen Reinigung vorgesehenen Abwasser, das bereits mechanisch vorgereinigt ist, gefülltes Tauchbecken ein. Hierbei dreht die in zwei Lagern abgestützte, von einem Antrieb beaufschlagte Welle die den Scheibentauchkörper bildenden Tauchscheiben, so daß stetig ein neuer Bereich der Oberfläche einer jeden Scheibe in das Abwasser eintaucht beziehungsweise mit dem Sauerstoff aus der Umgebungsluft in Kontakt kommt. Jede Scheibe eines Scheibentauchkörpers ist dementsprechend für die daran anhaftenden Mikroorganismen gleichzeitig Kontaktstelle zum Abwasser und zur Umgebungsluft.

Wegen der enormen Größe der Scheiben, die einen Durchmesser von drei Metern und mehr erreichen, ist ein Transport der Tauchscheibenkörper problematisch und häufig nicht möglich. Daher wurden Tauchscheibenkörper mit zerlegbaren Tauchscheiben entwickelt, welche sowohl hinsichtlich des Transports als auch in Bezug auf die gegebenenfalls erforderliche Auswechslung einer Tauchscheibe im Falle deren Beschädigung leicht zu handhaben sind.

Zu diesem Zweck sind gemäß der DE 94 09 352 U1 Tauchscheibenkörper mit aus einzelnen Sektoren zusammmengesetzten Tauchscheiben vorgesehen, welche an ihren Sektorengrenzen jeweils überlappen und mittels achsparallelen, die überlappenden Scheibenbereiche durchgreifenden und in radial angeordneten Streben geführten Zugstangen gehalten sind. Zwischen den axial aneinander angrenzenden Tauchscheiben sind jeweils Abstandhalter angeordnet, welche die Tauchscheiben auf Abstand halten, so daß zwischen den Scheiben jeweils ein Zwischenraum entsteht, der die Benetzung der eingetauchten Scheibenoberfläche mit dem Abwasser ermöglicht.

So zweckmäßig die Unterteilung der Tauchscheiben in einzelne Sektoren auch ist, so ist mit der bekannten Art der Befestigung der Nachteil verbunden, daß die verwendeten Sektorscheiben jeweils mit paßgenauen Bohrungen versehen werden müssen, das heißt, eine spezielle Bearbeitung der Scheiben ist unumgänglich. Ein weiterer Nachteil resultiert daraus, daß im Falle des erforderlichen Auswechselns eines Scheibensektors einer Scheibe, zum Beispiel infolge Beschädigung, alle zur Befestigung dieses Sektors verwendeten Zugstangen entfernt werden müssen, um so die Entnahme des beschädigten Sektors und das Einsetzen des neuen Sektors durchführen zu können.

Ausgehend von diesem Stand der Technik ist es Aufgabe der Erfindung, einen Scheibentauchkörper der eingangs genannten Art anzugeben, der ohne Nachteil für die bestimmungsgemäße Funktion in einfacher Weise zusammengesetzt ist und ein leichtes Auswechseln von gegebenenfalls beschädigten Sektoren gestattet.

Diese Aufgabe wird erfindungsgemäß durch die kennzeichnenden Merkmale des Anspruchs 1 gelöst. Vorteilhafte Weiterbildungen und Ausgestaltungen sind in den Unteransprüchen angegeben.

Entsprechend der vorliegenden Erfindung bilden die axial benachbarten Abstandhalter Spalträume, in welche die einzelnen Scheibensektoren eingreifen. Hierbei sind die Scheibensektoren jeweils zwischen zwei axial benachbarten Abstandhaltern kraftschlüssig gehalten.

Gemäß einer bevorzugten Ausführungsform der Erfindung sind die Abstandhalter auf einer Stirnseite mit axialen Ausnehmungen versehen sowie auf der entgegengesetzten Stirnseite mit angeformten, den Ausnehmungen angepaßten Nocken, Diese Formgebung der Abstandhalter ermöglicht se in weiterer Ausgestaltung der Erfindung, daß die Abstandhalter ineinander steckbar sind, indem die Ausnehmungen die hierin eingeführten Nocken aufnehmen.

Gemäß einer Weiterbildung der Erfindung sind die Abstandhalter kreiszylindrisch ausgebildet mit einem Durchmesser von wenigstens 70 mm und einer axialen Mindestdicke von 15 mm. Diese Mindestdicke ist maßgebend für den axialen Abstand der Scheibensektoren zueinander, wobei die in die Abstandhaltern eingeformten Ausnehmungen eine Eintauchtiefe von 5 mm und die axial angeformten Nocken eine Dicke von wenigstens 6 mm aufweisen.

Wegen der erfindungsgemäß entfallenden randnahen Bohrungen kann vorteilhafterweise die Dicke der zu Scheiben zusammengesetzten Sektoren zwischen 1 mm und höchstens 2,5 mm betragen, ohne daß eine Beschädigung der Platten, zum Beispiel infolge Ausreißen der Bohrungen, resultiert. Aufgrund der geringen Scheibendicke ist darüber hinaus eine Vergrößerung der aktiven Oberfläche der hiermit ausgerüsteten Scheibentauchkörperanlage ermöglicht, ohne daß diese zusätzliche bauliche Maßnahmen erfordert.

Entsprechend einer weiteren Ausgestaltung der Erfindung sind die zu Scheiben zusammengesetzten Sektoren aus Kunststoff, vorzugsweise aus Polypropylen, gebildet.

Gemäß einer besonders bevorzugten erfindungswesentlichen Ausführungsvariante der Erfindung sind die zu Scheiben zusammengesetzten Sektoren aus mit Talkmehl versetzten Polypropylen gebildet, wodurch eine erhöhte Festigkeit des Materials resultiert. Dies ist insofern von maßgeblicher Bedeutung, als hierdurch gewährleistet ist, daß die auf die Sektorscheiben einwirkenden Haltekräfte, die von den zusammengepreßten Abstandhalter ausgeübt werden, ohne Nachteil aufgenommen werden.

Zwar bestehen keine besonderen Materialabnforderungen an die Abstandhalter, doch hat es sich als günstig erwiesen, daß die Abstandshalter aus einem Kunststoff gebildet sind, der vorzugsweise ein Thermoplast ist und es gestattet die Abstandshalter als Kunststoffspritzgießteil zu fertigen.

Die beim erfindungsgemäßen Scheibentauchkörper zum Einsatz vorgesehenen Zuganker sind vorzugsweise aus korrosionsbeständigem Material gebildet, wobei insbesondere als Material für die Zuganker hochlegierter rostbeständiger Stahl, zum Beispiel ein austenitischer Stahl, vorzugsweise 1.4571, vorgesehen ist.

Die zur Befestigung der Tauchscheiben vorgesehene Welle ist erfindungsgemäß als Hohlwelle mit kreisförmigem Querschnitt ausgebildet und aus schweißbarem Stahl gefertigt. Zur Befestigung der radialen Streben für die Halterung und Führung der Zugstangen sind Haltelaschen vorgesehen, die gleichförmig am Umfang der Welle verteilt angeordnet daran angeschweißt sind.

Gemäß einer Ausgestaltung der Erfindung kann eine bestimmte Anzahl von aus Sektoren gebildeten Scheiben jeweils zu einem Paket zusammengefaßt sein.

Entsprechend einer weiteren Ausgestaltung können am Umfang der Scheiben parallel zur Wellenlängsachse verlaufende Sicherungsstäbe vorgesehen sein, die mit den radialen Streben verbunden sind und so dem aus den einzelnen Sektorscheiben gebildeten Scheibentauchkörper zusätzliche Stabilität verleihen. Vorteilhafterweise können die Sicherungsstäbe aus Vierkantrohr gebildet sein.

Eine weitere bevorzugte Ausgestaltung der Erfindung ist dadurch gekennzeichnet, daß die radialen Streben mittels ein Vieleck bildenden Verbindungsstreben gehalten sind, wobei sowohl die Verbindungsstreben als auch die Sicherungsstäbe und die radialen Streben jeweils aus korrosionsbeständigem Material, vorzugsweise aus rostfreiem Stahl, gebildet sind.

Diese und weitere vorteilhafte Ausgestaltungen und Verbesserungen der Erfindung sind Gegenstand der Unteransprüche. b

Anhand eines in der schematischen Zeichnung dargestellten Ausführungsbeipieles sollen die Erfindung, vorteilhafte Weiterbildungen und Verbesserungen der Erfindung näher erläutert und beschrieben werden.

Es zeigen:
- Fig. 1: einen Querschnitt durch einen erfindungsgemäßen, aus einzelnen von Scheibensektoren zusammengesetzten und von Radialstreben an einer Hohlwelle gehaltenen Scheiben gebildeten Scheibentauchkörper;
- Fig. 2: einen einzelnen mit zugeordneten Radialstreben versehenen Scheibensektor;
- Fig. 3: einen Längsschnitt durch einen Scheibentauchkörper gemäß Fig. 1;
- Fig. 4: einen Längsschnitt durch zwei benachbarte, ineinander gesteckte Abstandhalter und
- Fig. 5: eine Stirnansicht auf einen erfindungsgemäßen Abstandshalter.

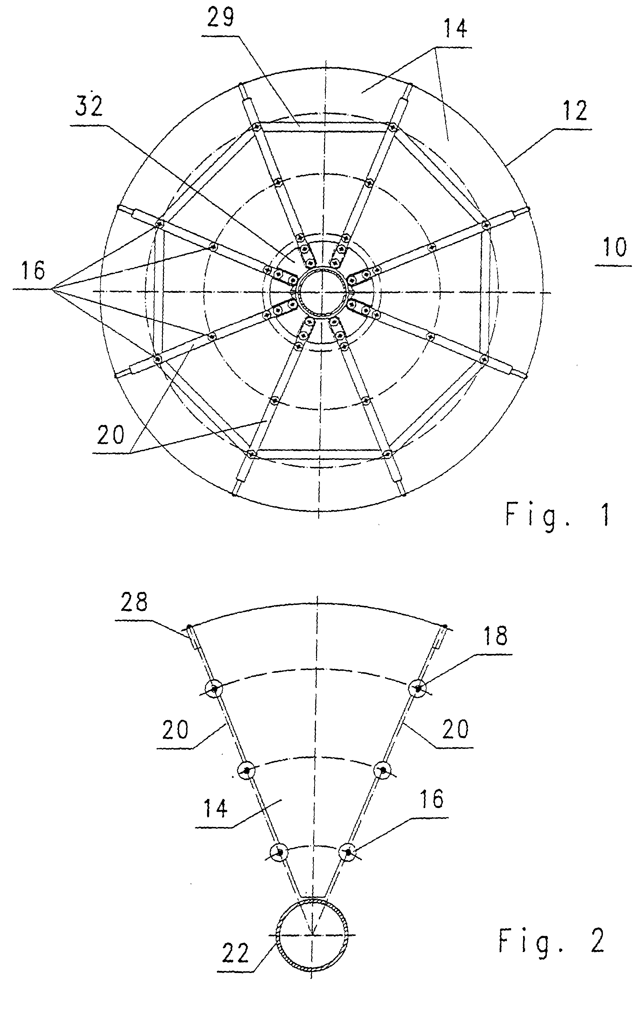

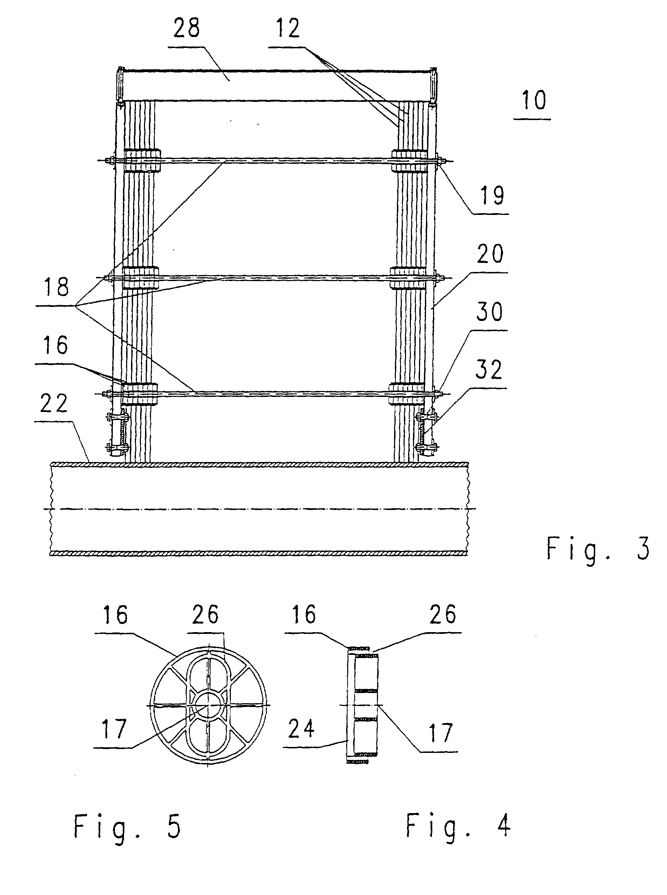

In Fig. 1 ist ein erfindungsgemäßer Scheibentauchkörper 10 im Querschnitt dargestellt, der aus einzelnen Scheiben 12, die, wie aus Fig. 3 ersichtlich, in engem Abstand axial zueinander angeordnet sind und aus einzelnen Sektorscheiben 14 zusammengesetzt sind.

Die einzelnen Sektorscheiben 14 grenzen mit ihren radialen Seiten stumpf aneinander an und greifen zwischen radial angeordnete Abstandhalter 16, welche die Scheibensektoren 14 kraftschlüssig zwischen sich nehmen.

Die Abstandhalter 16 sind mit Durchgangsbohrungen 17 versehen, die von achsparallel zur Längsachse des Scheibentauchkörpers 10 angeordneten Zugstangen 18 durchdrungen sind, welche in sogenannten Radialstreben 20 geführt sind. Die Radialstreben 20 ihrerseits sind mit einer aus einem Rohr größeren Durchmessers bestehenden, als Hohlwelle ausgebildeten Welle 22 verbunden.

Die Abstandhalter 16, die in Fig. 4 im Längsschnitt gezeigt sind, besitzen an ihren Stirnseiten bestimmte Formgebungen, welche es gestatten, daß axial benachbarte Abstandhalter 16 ineinander steckbar sind. Zu diesem Zweck ist jeweils eine Stirnseite eines erfindungsgemäßen Abstandshalters mit einer als Vertiefung ausgebildeten Ausnehmung 24 versehen, während an der entgegengesetzten Stirnseite des Abstandshalters 16 ein in der Formgebung der Vertiefung 24 angepaßter Nocken 26 angeformt ist.

Vorteilhafterweise besitzen die Ausnehmungen 24 und die Nokken 26 jeweils eine länglich gestreckte Form, so daß Relativverdrehungen zwischen zwei aneinander angrenzenden, ineinander gesteckten Abstandhaltern ausgeschlossen sind. Hieraus resultiert jeweils beiderseits der Ausnehmung 24 beziehungsweise des Nockens 26 eine symmetrische halbkreisförmige Fläche, welche erheblich größer ist als die an den schmalen Enden der Ausnehmung 24 beziehungsweise des Nockens 26 und als Anlagefläche für die Scheibensektoren 14 dient.

Gleichzeitig bietet diese Formgebung die Gewähr dafür, daß sich die zwischen benachbarten Abstandhaltern eingefügten Sektorscheiben an die Längsseite der an den Abstandhaltern 16 angeformten Nocken 26 anlegen und so mit einer ausreichend großen Haltekraft beaufschlagt werden können.

Die Radialstreben 20 sind, wie in den Fig. 1, 2 und 3 gezeigt, in jeweils gleichem radialen Abstand mit Ausnehmungen 28 versehen, durch welche die erwähnten Zugstangen 22 hindurchgeführt sind. An den äußeren Enden der Radialstreben 20 sind jeweils Sicherungsstäbe 28 zur mechanischen Stabilisierung angeordnet, die mit den Radialstreben 20 mittels Schraubverbindung verbunden sind, wie auch aus der Darstellung gemäß Fig. 3 hervorgeht.

Darüber hinaus können die einzelnen Radialstreben 20 eines Abschnitts mittels ein Polygon bildender Verbindungsstäbe 29, die parallel zu den Sektorscheiben 14, das heißt quer zu den Radialsteben 20 angeordnet sind, vorgesehen sein, um die strahlenförmig vom zentralen Wellenrohr abstehenden Radialstreben 20 zu stabilisieren.

In Fig. 3 ist ein Längsschnitt des erfindungsgemäßen Scheibentauchkörpers 10 gezeigt, aus welchem ersichtlich ist, daß die Radialstreben 20 in vorteilhafter Weise an Haltelaschen 30 angeschraubt sind, die an dem Wellenrohr 22 angeschweißt sind.

Zusätzlich kann eine in Fig. 1 gezeigte kreisringförmige Mitnehmerscheibe 32 vorgesehen sein, welche konzentrisch am Rohr 22 anschließt und ebenfalls mit den Haltelaschen verschraubt ist. Das Wellenrohr 22 und die Haltelaschen 30 sind vorzugsweise aus einem schweißbaren Stahl, zum Beispiel Baustahl wie St 52-3 oder St 37-2, gefertigt.

Ferner ist anhand der Darstellung in Fig. 3 und in Fig. 4 das erfindungsgemäße Befestigungsprinzip zur Verankerung der Sektorscheiben 14 mit Hilfe der Abstandhalter 16 gut zu erkennen. Die Abstandhalter sind wie Perlen auf einer Schnur hintereinander auf der zugeordneten Zugstange 18 in gleicher Ausrichtung angeordnet, so daß die Nocken 26 des einen Abstandshalters 16 in die korrespondierende Ausnehmung 24 des zugewandten angrenzenden Abstandshalters 16 eingreifen und die jeweilige Sektorscheibe 14 zwischen sich nehmen. Mit Hilfe von an den Enden der Zugstange 18 aufgeschraubten Spannmuttern 19 werden die von der betreffenden Zugstange durchdrungenen Abstandhalter 16 gegeneinander verspannt und damit auch die zwischengefügten Sektorscheiben 14.

Das Auswechseln einer oder mehrerer Sektorscheiben 14 ist mit Hilfe der erfindungsgemäßen Befestigung ausgesprochen einfach. Es müssen lediglich die erwähnten zu dem betreffenden Sektor gehörigen Spannmuttern 19 gelockert werden, so daß örtlich ein ausreichendes Axialspiel der Abstandhalter 16 zustande kommt und die betreffende Sektorscheibe 14 radial nach außen entnommen werden kann.

Anschließend kann auf entsprechende Weise in umgekehrter Reihenfolge die neue Sektorscheibe 14 eingefügt werden. Es müssen dann nur noch die betreffenden Spannmuttern wieder angezogen werden, um die Abstandhalter gegeneinander beziehungsweise gegen die Sektorscheiben 14 zu verspannen.

Grundsätzlich ist jede Teilung der Tauchscheiben 12 möglich, wobei jedoch je Tauchkörper stets eine einheitliche Teilung vorzusehen ist. Sie richtet sich in erster Linie nach deren Größe, das heißt, je größer der Durchmesser der Tauchscheibe 12 ist, um so mehr Sektoren werden vorgesehen, um hierdurch die Größe der Sektorscheiben 12 zu begrenzen. So kann eine sowohl eine gradzahlige Teilung vorgesehen sein, vorzugsweise eine 4er-Teilung oder 8er-Teilung, bei welcher die Sektoren 1/4 oder 1/8 der Scheibenfläche betragen, als auch ungerade Teilungen, zum Beispiel 1/5 oder 1/10.

Zwar führen höherzahlige Teilungen zu einer größeren Anzahl an erforderlichen Radialstreben 20, Zugstangen 18 und Abstandhaltern 16, doch kann dies dennoch günstiger für die Gesamtanlage sein, da die für diese Anlage benötigten Sektorenscheiben 14 stets gleich sind und ihr Transport und ihre Handhabung mit verringerten Abmessung einfacher sind.

Gegenüber den bisher zum Einsatz kommenden Sektorscheiben bedeutet die erfindungsgemäße Klemmbefestigung insoweit eine wesentliche Vereinfachung, als die zum Hindurchführen der Zugstangen 18 erforderlichen Bohrungen entfallen.

Diese Vereinfachung ist insbesondere deshalb von erheblicher Auswirkung, weil für eine einwandfreie Montage die Bohrungen in den Sektorscheiben paßgenau an den betreffenden Abständen vorzusehen sind, an denen die Zugstangen verlaufen. Bei Paßungenauigkeiten muß nachgearbeitet werden, was zusätzlichen Aufwand an Montagezeit und Kosten bedeutet.

Ein weiteres erfindungserhebliches Merkmal betrifft die Materialwahl für die bei den erfindungsgemäßen Scheibentauchkörper 10 zum Einsatz vorgesehenen Tauchscheiben 12 beziehungsweise Sektorscheiben 14.

Da erfindungungsgemäß die Sektorscheiben 14 lediglich mittels der zusammengepreßten Abstandhalter 16 gehalten werden, müssen die Sektorscheiben aus einem mechanisch genügend widerstandsfähigem Material gefertigt sein, um zu verhindern, daß das Material der Sektorscheiben 14 infolge der Preßkraft fließt und die mit Vorspannung verspannten Abstandhalter 16 beziehungsweise Sektorscheiben 14 sich lockern.

Hierzu ist entsprechend der Erfindung ferner vorgesehen, daß die Sektorscheiben 14 aus mit Talkmehl versetztem Polypropylen hergestellt werden, welches aufgrund der Talkmehlzugabe eine höhere mechanische Festigkeit erlangt und somit den gestellten Anforderungen gewachsen ist.

Bei dieser erfindungsgemäß vorgesehenen Materialwahl ist es ferner möglich im Vergleich zur herkömmlichen Technik besonders dünnwandige Sektorscheiben 14 einzubauen, die eine Wanddicke von etwa 1 bis 2 mm aufweisen. Abgesehen davon, daß hierdurch der Materialbedarf für jede Scheibe 12 um 50 bis 70 % reduziert ist, können bei Verwendung der erfindungsgemäßen dünnwandigen Tauchscheiben 12 pro Scheibentauchkörper 10 mehr Tauchscheiben 12 als bisher eingebaut werden. Hierdurch steht eine entsprechend größere Austausch- beziehungsweise Bewuchsträgerfläche zur Verfügung was die Wirksamkeit der Scheibentauchkörperanlage bei gleichbleibenden Abmessungen beträchtlich verbessert.

### Bezugszeichenliste

- 10: Scheibentauchkörper
- 12: Tauchscheibe
- 14: Sektorscheibe
- 16: Abstandhalter
- 17: Durchgangsbohrung
- 18: Zugstange
- 19: Spannmutter
- 20: Radialstrebe
- 22: Welle (Hohlwelle)
- 24: Ausnehmung (Vertiefung)
- 26: Nocken
- 28: Sicherungsstab
- 29: Verbindungsstab
- 30: Haltestrebe
- 32: Mitnehmerscheibe

## Patentansprüche

1. Scheibentauchkörper (10) mit einer Welle (22), auf welcher eine Vielzahl von kreisförmigen, aus einzelnen sektorförmigen Sektorscheiben (14)mit gleichem Radius zusammengesetzten Scheiben (12) radial angeordnet und von achsparallelen, in radial angeordneten Streben (18) geführten Zugstangen (20) gehalten sind, welche Scheiben (12) mittels zwischengefügter Abstandhalter (16) einen definierten axialen Abstand zueinander aufweisen,
**dadurch gekennzeichnet, daß** die axial benachbarten Abstandhalter (16) Spalträume bilden, in welche die einzelnen Sektorscheiben (14) eingreifen, und daß die Sektorscheiben (14) jeweils zwischen zwei axial benachbarten Abstandhaltern (16) kraftschlüssig gehalten sind.

2. Scheibentauchkörper nach Anspruch 1, **dadurch gekennzeichnet, daß** die Abstandhalter (16) auf einer Stirnseite mit axialen Ausnehmungen (24) versehen sind sowie auf der entgegengesetzten Stirnseite mit angeformten, den Ausnehmungen (24) angepaßten Nocken (26).

3. Scheibentauchkörper nach Anspruch 2, **dadurch gekennzeichnet, daß** die Abstandhalter (16) ineinander steckbar sind, indem die Ausnehmungen (24) die hierin eingeführten Nocken (26) aufnehmen.

4. Scheibentauchkörper nach einem der vorherigen Ansprüche, **dadurch gekennzeichnet, daß** die Abstandhalter (16) kreiszylindrisch ausgebildet sind mit einem Durchmesser von wenigstens 70 mm und einer axialen Mindestdicke von 15 mm.

5. Scheibentauchkörper nach einem der vorherigen Ansprüche, **dadurch gekennzeichnet, daß** die in die Abstandhaltern (16) eingeformten Ausnehmungen (24) eine Eintauchtiefe von 5 mm aufweisen.

6. Scheibentauchkörper nach einem der vorherigen Ansprüche, **dadurch gekennzeichnet, daß** die axial angeformten Nocken (26) eine Dicke von wenigstens 6 mm aufweisen.

7. Scheibentauchkörper nach einem der vorherigen Ansprüche, **dadurch gekennzeichnet, daß** die Dicke der zu Scheiben (12) zusammengesetzten Sektorscheiben (14) wenigstens 1 mm und höchstens 2,5 mm beträgt.

8. Scheibentauchkörper nach einem der vorherigen Ansprüche, **dadurch gekennzeichnet, daß** die zu Scheiben (12) zusammengesetzten Sektorscheiben (14) aus Kunststoff gebildet sind.

9. Scheibentauchkörper nach einem der vorherigen Ansprüche, **dadurch gekennzeichnet, daß** die zu Scheiben (12) zusammengesetzten Sektorscheiben (14) aus Polypropylenplatten gebildet sind.

10. Scheibentauchkörper nach einem der vorherigen Ansprüche, **dadurch gekennzeichnet, daß** die Abstandshalter (16) aus einem Kunststoff gebildet sind.

11. Scheibentauchkörper nach Anspruch 10, **dadurch gekennzeichnet, daß** die Abstandshalter (16) als Kunststoffspritzgießteil gefertigt sind.

12. Scheibentauchkörper nach einem der vorherigen Ansprüche, **dadurch gekennzeichnet, daß** die Zugstangen (18) aus korrosionsbeständigem Material gebildet sind.

13. Scheibentauchkörper nach Anspruch 12, **dadurch gekennzeichnet, daß** als Material für die Zugstangen (18) hochlegierter rostbeständiger Stahl vorgesehen ist.

14. Scheibentauchkörper nach Anspruch 13, **dadurch gekennzeichnet, daß** die Zugstangen (18) aus einem austenitischen Stahl, zum Beispiel 1.4571, gebildet sind.

15. Scheibentauchkörper nach einem der vorherigen Ansprüche, **dadurch gekennzeichnet, daß** die Welle (22) als Hohlwelle mit kreisförmigem oder vielkantförmigen Querschnitt ausgebildet ist.

16. Scheibentauchkörper nach Anspruch 15, **dadurch gekennzeichnet, daß** die Welle (22) aus schweißbarem Stahl gebildet ist und daß gleichförmig am Umfang verteilte Haltelaschen für die radialen Streben (20) vorgesehen sind.

17. Scheibentauchkörper nach einem der vorherigen Ansprüche, **dadurch gekennzeichnet, daß** eine bestimmte Anzahl von aus Sektoren (14) gebildeten Scheiben (12) jeweils zu einem Paket zusammengefaßt ist.

18. Scheibentauchkörper nach einem der vorherigen Ansprüche, **dadurch gekennzeichnet, daß** am Umfang der Scheiben (12) parallel zur Wellenlängsachse verlaufende Sicherungsstäbe (28) vorgesehen sind, die mit den radialen Streben (20) verbunden sind.

19. Scheibentauchkörper nach Anspruch 18, **dadurch gekennzeichnet, daß** die Sicherungsstäbe (28) aus Vierkantrohr gebildet sind.

20. Scheibentauchkörper nach einem der vorherigen Ansprüche, **dadurch gekennzeichnet, daß** die radialen Streben (20) mittels ein Vieleck bildenden Verbindungsstreben (29) gehalten sind.

21. Scheibentauchkörper nach einem der Ansprüche 18 bis 20, **dadurch gekennzeichnet, daß** die Sicherungsstäbe (28), die Verbindungsstreben (29) und die radialen Streben (20) jeweils aus korrosionsbeständigem Material, vorzugsweise aus rostfreiem Stahl, gebildet sind.

22. Scheibentauchkörper nach einem der vorstehenden Ansprüche, **dadurch gekennzeichnet, dass** jede Sektorscheibe (14) aus mit Talkmehl versetzten Polypropylen besteht.

## Claims

1. Biological disc (10) with a shaft (22), on which a plurality of circular discs (12), made up of individual sector-shaped sector discs (14) of the same radius, are arranged radially and are held by tie rods (18) with parallel axes passing through struts (20) arranged radially, these discs (12), by means of intermediately placed spacers (16), exhibiting a defined axial spacing from each other, **characterised in that** the axially adjacent spacers (16) form gaps into which the individual sector discs (14) engage, and **in that** the sector discs (14) are each held positively locked between two axially adjacent spacers (16).

2. Biological disc according to Claim 1, **characterised in that** the spacers (16) are provided, on one outside face, with axial recesses (24) as well as, on the opposite outside face, with bosses (26) formed on them and matching with the recesses (24).

3. Biological disc according to Claim 2, **characterised in that** the spacers (16) can be plugged into one another, the recesses (24) accommodating the bosses (26) inserted into them.

4. Biological disc according to one of the preceding claims, **characterised in that** the spacers (16) are formed as circular cylinders with a diameter of at least 70 mm and a minimum axial thickness of 15 mm.

5. Biological disc according to one of the preceding claims, **characterised in that** the recesses (24) formed in the spacers (16) exhibit an insertion depth of 5 mm.

6. Biological disc according to one of the preceding claims, **characterised in that** the axially formed bosses (26) exhibit a thickness of at least 6 mm.

7. Biological disc according to one of the preceding claims, **characterised in that** the thickness of the sector discs (14) made up into discs (12) is at least 1 mm and at most 2.5 mm.

8. Biological disc according to one of the preceding claims, **characterised in that** the sector discs (14) made up into discs (12) are formed from plastic.

9. Biological disc according to one of the preceding claims, **characterised in that** the sector discs (14) made up into discs (12) are formed from sheets of polypropylene.

10. Biological disc according to one of the preceding claims, **characterised in that** the spacers (16) are formed from a plastic.

11. Biological disc according to Claim 10, **characterised in that** the spacers (16) are produced as injection-moulded plastic components.

12. Biological disc according to one of the preceding claims, **characterised in that** the tie rods (18) are formed from corrosion-resistant material.

13. Biological disc according to Claim 12, **characterised in that** high-alloy stainless steel is designated as the material for the tie rods (18).

14. Biological disc according to Claim 13, **characterised in that** the tie rods (18) are formed from an austenitic steel, for example 1.4571.

15. Biological disc according to one of the preceding claims, **characterised in that** the shaft (22) is formed as a hollow shaft with circular or polygonal cross-section.

16. Biological disc according to Claim 15, **characterised in that** the shaft (22) is formed from weldable steel and **in that** shackles are provided, distributed regularly on the periphery, for the radial struts (20).

17. Biological disc according to one of the preceding claims, **characterised in that** a set number of discs (12) formed from sectors (14) are respectively combined into a stack.

18. Biological disc according to one of the preceding claims, **characterised in that**, at the periphery of the discs (12), securing rods (28) running parallel to the long axis of the shaft are provided, which are connected to the radial struts (20).

19. Biological disc according to Claim 18, **characterised in that** the securing rods (28) are formed from rectangular pipe.

20. Biological disc according to one of the preceding claims, **characterised in that** the radial struts (20) are held by means of connecting struts (29) forming a polygon.

21. Biological disc according to one of Claims 18 to 20, **characterised in that** the securing rods (28), the connecting struts (29) and the radial struts (20) are formed in each case from corrosion-resistant material, preferably from stainless steel.

22. Biological disc according to one of the preceding claims, **characterised in that** each sector disc (14) consists of polypropylene to which talcum powder has been added.

## Revendications

1. Disque biologique (10) comprenant un arbre (22) portant un ensemble de disques (12) circulaires, formés de différents secteurs de disques (14) de même rayon, ces disques étant disposés radialement, et tenus par des tirants (20) d'axes parallèles, passant dans des entretoises (18) radiales, les disques (12) ayant des écarteurs (16) pour qu'ils présentent une distance axiale déterminée,
**caractérisé en ce que**
les écarteurs (16) voisins axialement forment des espaces de séparation dans lesquels pénètrent les différents secteurs de disques (14) et
les secteurs de disques (14) sont tenus par une liaison par la force chaque fois entre deux écarteurs (16) voisins axialement.

2. Disque biologique selon la revendication 1,
**caractérisé en ce que**
les écarteurs (16) sont munis, sur une face frontale, de cavités axiales (24) et sur la face frontale opposée ils comportent des bossages (26) formés, et adaptés aux cavités (24).

3. Disque biologique selon la revendication 2,
**caractérisé en ce que**
les écarteurs (16) sont engagés les uns dans les autres par les cavités (24) qui reçoivent les bossages (26) introduits dans celles-ci.

4. Disque biologique selon l'une quelconque des revendications précédentes,
**caractérisé en ce que**
les écarteurs (16) sont de forme cylindrique circulaire et ont un diamètre d'au moins 70 mm et une épaisseur axiale minimale d'au moins 15 mm.

5. Disque biologique selon l'une quelconque des revendications précédentes,
**caractérisé en ce que**
les cavités (24) formées dans les écarteurs (16) ont une profondeur de pénétration de 5 mm.

6. Disque biologique selon l'une quelconque des revendications précédentes,
**caractérisé en ce que**
les bossages (26), formés axialement, ont une épaisseur d'au moins 6 mm.

7. Disque biologique selon l'une quelconque des revendications précédentes,
**caractérisé en ce que**
l'épaisseur des secteurs de disques (14) combinés en disques (12) est d'au moins 1 mm et au plus égale à 2,5 mm.

8. Disque biologique selon l'une quelconque des revendications précédentes,
**caractérisé en ce que**
les secteurs de disques (14) combinés en disques (12) sont en matière plastique.

9. Disque biologique selon l'une quelconque des revendications précédentes,
**caractérisé en ce que**
les secteurs de disques (14) combinés en disques (12) sont des plaques de polypropylène.

10. Disque biologique selon l'une quelconque des revendications précédentes,
**caractérisé en ce que**
les écarteurs (16) sont en matière plastique.

11. Disque biologique selon la revendication 10,
**caractérisé en ce que**
les écarteurs (16) sont constitués par des pièces injectées en matière plastique.

12. Disque biologique selon l'une quelconque des revendications précédentes,
**caractérisé en ce que**
les tirants (18) sont en une matière résistant à la corrosion.

13. Disque biologique selon la revendication 12,
**caractérisé en ce que**
la matière pour les tirants (18) est de l'acier inoxydable fortement allié.

14. Disque biologique selon la revendication 13,
**caractérisé en ce que**
les tirants (18) sont en acier austénitique, par exemple en acier 1.4571.

15. Disque biologique selon l'une quelconque des revendications précédentes,
**caractérisé en ce que**
l'arbre (22) est un arbre creux de section circulaire ou polygonale.

16. Disque biologique selon la revendication 15,
**caractérisé en ce que**
l'arbre (22) est en acier susceptible d'être soudé et comporte, réparties régulièrement à la périphérie, des pattes de fixation pour les entretoises radiales (20).

17. Disque biologique selon l'une quelconque des revendications précédentes,
**caractérisé en ce qu'**
un certain nombre de disques (12) formés de secteurs (14) sont regroupés en un paquet.

18. Disque biologique selon l'une quelconque des revendications précédentes,
**caractérisé en ce qu'**
à la périphérie des disques (12), parallèlement à l'axe longitudinal de l'arbre, on a des tiges de sécurité (28) reliées aux entretoises radiales (20).

19. Disque biologique selon la revendication 18,
**caractérisé en ce que**
les tiges de sécurité (28) sont des tubes à section polygonale.

20. Disque biologique selon l'une quelconque des revendications précédentes,
**caractérisé en ce que**
les entretoises radiales (20) sont tenues à l'aide d'entretoises de liaison (29) formant un polygone.

21. Disque biologique selon l'une quelconque des revendications 18 à 20,
**caractérisé en ce que**
les tiges de sécurité (28), les entretoises de liaison (29) et les entretoises radiales (20) sont réalisées en une matière résistant à la corrosion, de préférence en acier inoxydable.

22. Disque biologique selon l'une quelconque des revendications précédentes,
**caractérisé en ce que**
chaque secteur de disques (14) est du polypropylène chargé de farine de talc.
